# EUROPEAN PATENT SPECIFICATION

(11) **EP 3 017 700 B1**
(45) Date of publication and mention of the grant of the patent: **24.07.2019**
(21) Application number: 15192869.4
(22) Date of filing: 04.11.2015
(51) Int. Cl.: A22B 5/04

(54) **DEVICE AND METHOD FOR COLLECTING SLAUGHTER ANIMAL BLOOD**
VORRICHTUNG UND VERFAHREN ZUM SAMMELN VON SCHLACHTTIERBLUT
DISPOSITIF ET PROCÉDÉ POUR RECUEILLIR DU SANG D'ANIMAUX D'ABATTAGE

(30) Priority: 04.11.2014 EP 14191619
(43) Date of publication of application: 11.05.2016
(73) Proprietor: Veos NV, 8750 Zwevezele (BE)
(72) Inventor: Slee, Wim, 8750 Wingene (BE)
(74) Representative: Pappaert, Kris

(56) References cited:
- EP-A1- 0 596 041
- EP-A1- 0 843 970
- DE-A1- 1 803 837
- GB-A- 1 131 117
- US-A- 1 582 020
- US-A- 5 148 922

## Description

### FIELD OF THE INVENTION

The present invention relates to methods and devices for collecting slaughter animal blood. The present invention also relates to the use of certain methods and/or devices for collecting slaughter animal blood and for overcoming blood clotting related challenges in the field of blood collection. The present invention also relates to methods, devices and the use of methods and devices for ensuring more efficient slaughter animal blood collection.

### BACKGROUND

In slaughter lines, efficient and hygienic slaughter animal blood collection is essential as blood is a valuable resource. Blood collection in slaughterhouses is performed during bleeding of slaughter animals. Bleeding is a preferred technique for killing slaughter animals in slaughterhouses; the slaughterhouse killing of animals involves stunning or anesthetizing the animals, conveying the stunned or anesthetized animals in a hanging or lying state in a slaughtering line and killing the animals through exsanguination or bleeding. In some slaughter houses, bleeding is performed by sticking a hollow knife into the animal's neck for withdrawal of the blood, resulting in bleeding which causes the animal to die in a short time. As blood is a valuable resource, great effort is taken to collect it as efficiently as possible. In some collecting systems, the hollow sticking knife is connected via a hose to a collecting vessel. In other collecting systems, the hollow sticking knife is connected to a sterile pouch for collecting the blood.

However, not all blood is directly collected via e.g. the hollow sticking knife during the bleeding process. Typically only 75% of the blood can be collected directly, the remaining part of the blood (about 25%) needs to be collected by other means.

In order to prevent valuable resources going to waste, dedicated blood treatment facilities are built for taking charge of the blood which is not directly collected during the bleeding process.

When collecting blood, care should be taken that it is treated diligently because it clots easily when stagnant and exposed to air, said problem being already known in the context of blood banks (e.g. GB 1 131 117). Accordingly, there is a general need for systems that allow the fast and efficient collection of blood. The present invention provides a solution to this need.

### SUMMARY OF THE INVENTION

In a first aspect, the present invention relates to a device for collecting slaughter animal blood according to claim 1, comprising:
- one or more plates (200), preferably tilted plates, the one or more plates (200) having an inlet (230) and an outlet (220);
- one or more containers (300) positioned at the outlet (220) of the one or more plates (200), wherein blood flowing off the plates (200) is collected;
- optionally, a fluidic system for recirculating said blood from at least one of said containers (300) to the inlet (230) of said one or more plates (200); and
- optionally, one or more overflow tanks for collecting excess blood from said one or more containers (300);
wherein the one or more plates (200) are further characterized by having a textured surface (100).

More preferably, the textured surface (100) is a ribbed surface preferably wherein the ribs (110,110',110") of the ribbed surface are arranged as a staggered pattern (260) comprising a simple square lattice of oblong protrusions, oblong protrusions at adjacent lattice sites being rotated with respect to each other about an angle of 90°. More preferably the ribbed surface (100) comprises ribs (110, 110', 110") shaped as elongated grooves.

In a particular embodiment, the device according to the invention provides that the ribs (110, 110', 110") of said ribbed surface (100) have a V-shape, U-shape, trapezoid-shape, beam-shape, ellipse-shape, hemi circle-shapes, and/or inverted hemi-circle shapes.

In a particular embodiment, the device according to the invention provides that the plates (200), preferably tilted plates, are made from ultra-high-molecular-weight polyethylene or stainless steel.

In a particular embodiment, the device according to the invention provides that the height of the ribs (110, 110', 110") of said ribbed surface (100) range between 0.10 mm and 100 mm, preferably between 1.0 and 20 mm, more preferably about 10 mm.

In a particular embodiment, the device according to the invention provides that the lateral characteristic dimension of the individual ribs (110, 110', 110") in said ribbed surface (100) ranges between 0.10 mm and 100 mm, preferably between 1.0 mm and 20 mm, more preferably about 10 mm.

The device according to the invention provides that the one or more plates (200) are tilted plates, forming a tilted surface (100) having a slope between 0.0% and 20%, preferably between 1.0 and 10%, and more preferably about 2.0%.

In a particular embodiment, the device according to the invention further comprises a slaughter animal suspension unit (430) for transporting slaughter animals in a direction of transport, and the device according to the invention provides that the direction of slope of said surface (100) is parallel to the direction of transport of the slaughter animals (410, 411, 412, 413, 414, 415) along a slaughter animal suspension unit (430), or in which the direction of slope of said tilted surface (100) is perpendicular to the direction of transport of the slaughter animals (410, 411, 412, 413, 414, 415) along a slaughter animal suspension unit (430), or in which the direction of slope of said tilted surface (100) is at an oblique angle to the direction of transport of the slaughter animals (410, 411, 412, 413, 414, 415) along a slaughter animal suspension unit (430).

In a particular embodiment, the device according to the invention provides that the width of said surface (100) is between 0.050 m and 10.0 m, preferably between 0.20 m and 5.0 m, more preferably about 0.8 m.

In a further aspect, the present invention provides in a method for collecting slaughter animal blood according to claim 9, said method comprising
(a) intercepting said blood on one or more plates (200),
(b) collecting said blood in one or more containers (300) at outlet (220) of the plates (200);
(c) optionally, recirculating said blood from said one or more containers (300) to the inlet of said one or more plates (200), thereby ensuring continual blood flow on said one or more plates (200); and
(d) optionally, collecting said blood in one or more overflow tanks for collecting excess blood from said containers;
wherein the one or more plates (200) are further characterized by having a textured surface (100).

More preferably, said method provides in that an anticoagulant is added to the blood.

In a further aspect the present invention relates to the use of the device as disclosed herein for collecting slaughter animal blood.

### BRIEF DESCRIPTION OF THE DRAWINGS

The following description of the figures of specific embodiments of the invention is merely exemplary in nature and is not intended to limit the present teachings, their application or uses. Throughout the drawings, corresponding reference numerals indicate like or corresponding parts and features.
**Figure 1** shows a cross-section of a plate (200) for collecting blood.
**Figure 2** shows a top-view of a plate (200) according to particular embodiments of the present invention in which the plate (200) has a bended shape.
**Figure 3** shows a top-view of a plate (200) according to particular embodiments of the present invention in which the plate (200) has a rectangular shape.
**Figure 4** shows a top-view of a plate (200) according to particular embodiments of the present invention.
**Figure 5** shows a top-view of a plate (200) according to particular embodiments of the present invention.
**Figure 6** illustrates how the device according to the present invention is used in a slaughter line (400).
**Figure 7** shows a close-up of a plate (200) for collecting blood, the plate (200) having a ribbed surface, the ribs (110,110',110") being arranged in a staggered pattern (260, and the ribs (110,110',110") being shaped as oblong protrusions.

### DETAILED DESCRIPTION

The present invention will be described with respect to particular embodiments but the invention is not limited thereto but only by the claims. Any reference signs in the claims shall not be construed as limiting the scope thereof.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The recitation of numerical ranges by endpoints includes all numbers and fractions subsumed within the respective ranges, as well as the recited endpoints.

All documents cited in the present specification are hereby incorporated by reference in their entirety.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

This invention relates to a device for collecting blood, preferably animal blood, preferably slaughter animal blood. In addition, this invention relates to a method for collecting blood, preferably animal blood, preferably slaughter animal blood. This invention also relates to the use of a device for blood collection, preferably animal blood collection, preferably slaughter animal blood collection.

The present invention is in the field of blood recovery, preferably animal blood, preferably slaughter animal blood recovery. The present invention provides in one or more large, flat, preferably tilted plates, for the collection of blood, in which the plates (200) are further characterized by being textured.

In preferred embodiments, the present invention features flat plates (200) for collecting slaughter animal blood. Preferably, the plates (200) have a rim (210, 210') for preventing excess blood from flowing over the plate's (200) edges at undesirable locations. Preferably, excess blood flows off the plates through an outlet (220).

The term "flat plates" as used herein refers to plates (200) which are approximately aligned with the horizontal plane; in which being approximately aligned with the horizontal plane is understood to imply that the smallest angle between the normal of the plates' plane and the vertical direction is no more than 2.0%, preferably less than 1.0%, preferably about 0.0%.

Preferably, the plates (200) are tilted to assist blood flow in a particular direction. The plates' tilt causes blood to flow from the higher end of the tilted plates to the lower end of the tilted plates, where it flows off the plates, preferably through an outlet (220) and where it is collected in, for example, one or more containers (300) which are placed at the lower end of the tilted plates.

Because blood clots easily when stagnant and exposed to air, continual blood flow is preferably maintained over the entire surface (100) of the plates (200). In the present invention, this is partly or optionally accomplished through the use of dedicated fluidic systems for blood recirculation which take in blood from containers (300) at the plates' (200) outlet (220), and disperse the blood at the plates' (200) inlet (230). In the case of tilted plates, the outlet (220) is preferably positioned at the lower end of the tilted plates, and the inlet (230) is preferably positioned at the higher end of the tilted plates.

Although blood recirculation partly alleviates blood clotting problems, non-uniform flow patterns may still occur even for a very even distribution of blood. Such flow pattern irregularities are self-reinforcing as blood in areas with a lower flow rate clots more easily, thereby further obstructing blood flow at that location, thereby reinforcing the flow pattern irregularities. In the art, this problem is partially, though imperfectly tackled through the addition of anticoagulants to the collected blood.

The present invention provides a device and a method to overcome said problem of flow pattern irregularities, thereby avoiding or reducing the problem of blood clotting. This invention also relates to the use of a device or method for overcoming or reducing the problem of blood clotting. More specifically, it the inventors made the remarkable discovery that the above issues can be overcome by providing onto the plates (200) a textured surface (100).

In a first aspect, the present invention provides a device for collecting blood, preferably animal blood, preferably slaughter animal blood, comprising:
- one or more plates (200), the one or more plates having an inlet (230) and an outlet (220);
- one or more containers (300) positioned at the outlet (220) of the one or more plates (200), wherein blood flowing off the plates (200) is gathered;
- optionally, a fluidic system for recirculating said blood from at least one of said containers (300) to the inlet (230) of at least one of said plates (200); and;
- optionally, one or more overflow tanks for collecting excess blood from said one or more containers (300);
wherein the one or more plates (200) are further characterized by having a textured surface (100).

In a preferred embodiment, the present invention provides a device for collecting blood, preferably animal blood, preferably slaughter animal blood, comprising:
- one or more plates (200), the one or more plates having an inlet (230) and an outlet (220);
- one or more containers (300) positioned at the outlet (220) of the one or more plates (200), wherein blood flowing off the plates (200) is gathered;
- a fluidic system for recirculating said blood from at least one of said containers (300) to the inlet (230) of at least one of said plates (200); and;
- optionally, one or more overflow tanks for collecting excess blood from said one or more containers (300);
wherein the one or more plates (200) are further characterized by having a textured surface (100).

In a preferred embodiment, the present invention provides a device for collecting blood, preferably animal blood, more preferably slaughter animal blood, comprising:
- one plate (200), the plate (200) having an inlet (230) and an outlet (220);
- one container (300) positioned at the outlet (220) of the plate (200), wherein blood flowing off the plate (200) is gathered;
- optionally, a fluidic system for recirculating said blood from at said one container (300) to the inlet (230) of said plate (200); and
- optionally, one overflow tank for collecting excess blood from said container (300);
wherein said plate (200) is further characterized by having a textured surface (100).

In a preferred embodiment, the present invention provides a device for collecting blood, preferably animal blood, more preferably slaughter animal blood, comprising:
- one plate (200), the plate (200) having an inlet (230) and an outlet (220);
- one container (300) positioned at the outlet (220) of the plate (200), wherein blood flowing off the plate (200) is gathered;
- a fluidic system for recirculating said blood from at said one container (300) to the inlet (230) of said plate (200); and
- optionally, one overflow tank for collecting excess blood from said container (300);
wherein said plate (200) is further characterized by having a textured surface (100).

In particular embodiments, the present invention provides a device for collecting blood, preferably animal blood, more preferably slaughter animal blood, comprising:
- at least two plates (200), the two plates (200) partially overlapping in a way similar to overlapping shingles in a roof such that blood does not spill from the interconnection between the two plates (200); or the system comprising at least two plates (200), the two plates closely fitting and the seam between the two plates being sealed, for example by means of welding, such that blood does not spill between the plates (200);
- one container (300) positioned at the outlet (220) of the plates (200), wherein blood flowing off the plates (200) is gathered;
- optionally, a fluidic system for recirculating the blood from the container to an inlet (220) of the plates (200); and
- optionally, an overflow tank for collecting excess blood from the container (300); wherein the at least two plates (200) are further characterized by having a textured surface (100).
In particular embodiments, the present invention provides a device for collecting blood, preferably animal blood, more preferably slaughter animal blood, comprising:
- at least two plates (200), the two plates (200) partially overlapping in a way similar to overlapping shingles in a roof such that blood does not spill from the interconnection between the two plates (200); or the system comprising at least two plates (200), the two plates closely fitting and the seam between the two plates being sealed, for example by means of welding, such that blood does not spill between the plates (200);
- one container (300) positioned at the outlet (220) of the plates (200), wherein blood flowing off the plates (200) is gathered;
- a fluidic system for recirculating the blood from the container to an inlet (220) of the plates (200); and
- optionally, an overflow tank for collecting excess blood from the container (300);
wherein the at least two plates (200) are further characterized by having a textured surface (100).

During the blood collection process, one or more anticoagulants may be added such as for instance citrate, trisodium citrate, heparin, Ethylene Diamine Tetra Acetic Acid (EDTA), phosphates such as trisodiumphosphate, oxalate or combinations thereof. Anticoagulants may be added to the blood in order to minimize blood clotting. The addition of the anticoagulant may occur at different stages during the blood collection process. Typical methods include sprinkling anticoagulant onto the one or more plates (200) during the collection of blood onto the plates (200). By adding the anticoagulant directly onto the plates (200), the collected blood is mixed with the anticoagulant upon contact with the one or more plates (200) thereby minimizing the risk of blood clotting.

The inventors have surprisingly found that the use of textured plates (200) results in less blood clotting on the blood collection plates (200). In particular, the textured surface (100) reduces the risk of areas where blood is stagnant. Blood clots form easily when it is stagnant and when it is exposed to air. Therefore, continual blood flow over the textured surface (100) is preferably maintained over the entire surface (100) of the one or more plates (200).

In particular embodiments, the surface texture of the one or more plates (200) comprises a staggered pattern (260). Staggered patterns (260) are one of the types of surface texture which are particularly efficient at evenly distributing blood over the one or more tilted plates. A staggered pattern (260) is a pattern comprising a non-uniform arrangement of a repeating element. A repeating element is any geometric shape or form, or arrangement of geometric shapes or forms which is repeated multiple times. Examples of repeating elements are a dot, a line, a cube or a circle. More complex shapes such as branched structures can also feature as a repeating element. In some embodiments, the repeating element, such as a dot, a line, a cube or a circle may protrude from the surface (100).

In some embodiments, the surface texture of the one or more tilted plates comprises a honeycomb pattern. Honeycomb patterns are one of the types of surface texture which are particularly efficient at evenly distributing blood over the one or more tilted plates. The term "honeycomb pattern" as used herein is a pattern consisting of a lattice of repeating elements with a hexagonal shape, resembling the pattern found in honeycombs.

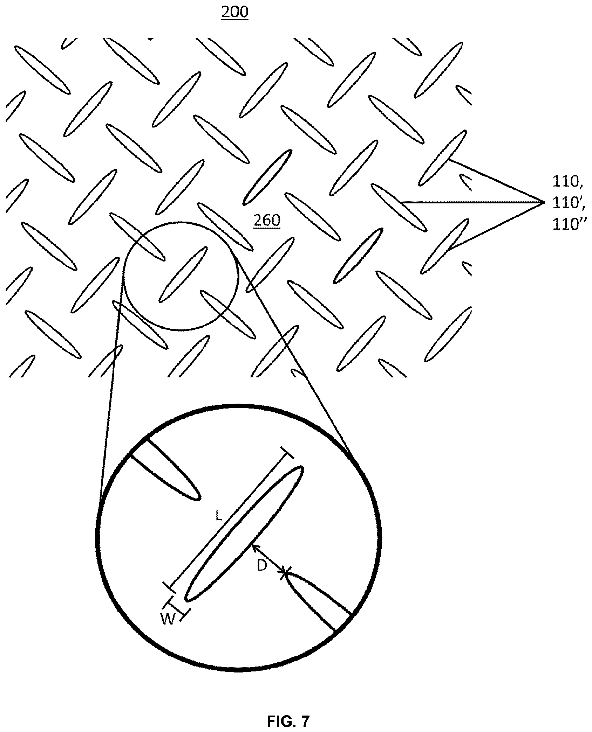

In preferred embodiments, the ribs (110,110',110") of the ribbed surface are arranged as a staggered pattern (260) comprising a simple square lattice of oblong protrusions. Accordingly, in these preferred embodiments, the ribs (110,110',110") are shaped as oblong protrusions. Preferably, oblong protrusions at adjacent lattice sites are rotated with respect to one another. More preferably, the oblong protrusions at adjacent lattice sites are rotated about an angle of about 90°. An example of such a staggered pattern (260) is shown in Figure 7.

Accordingly, in preferred embodiments, the textured surface (100) is a ribbed surface, preferably wherein the ribs (110,110',110") of the ribbed surface are arranged as a staggered pattern (260) comprising a simple square lattice of oblong protrusions, oblong protrusions at adjacent lattice sites being rotated with respect to each other about an angle of 90°.

Preferably, oblong protrusions at adjacent lattice sites are rotated about an angle of at least 70° to at most 90°, more preferably about an angle of 90°. Preferably, the oblong protrusions have a length L of at least 20mm to at most 40mm, more preferably a length L of 30mm. Preferably, the oblong protrusions have a width W of at least 2.5 mm to at most 10 mm, more preferably a width W of 5 mm. Preferably, the distance D between adjacent oblong protrusions is at least 5mm to at most 20mm, preferably 10 mm.

The term "slaughter animals" (410, 411, 412, 413, 414, 415) as used herein refer to nonhuman animals, usually domestic livestock. In general, the animals are killed for food. Examples of slaughter animals which are killed for food are cattle, water buffalo, sheep, lambs, goats, pigs, deer, horses, poultry, or fish.

The term "bodily fluids" as used herein refers to liquids originating from inside the bodies of animals, for example blood.

Blood is a bodily fluid in animals that delivers necessary substances such as nutrients and oxygen to the cells and transports metabolic waste products away from those same cells. In vertebrates, blood is composed of blood cells suspended in blood plasma.

In some embodiments, the plates for collecting blood are tilted plates.

The term "plates" (200) as used herein refers to objects of which the characteristic size is much smaller in one spatial dimension compared to their characteristic size in the other two spatial dimensions.

The term "tilted plates" as used herein refers to objects for which the plane in which the tilted plate is oriented makes an oblique angle with the horizontal plane. Tilted plates typically have an overall planar shape. According to the embodiments of the present invention, the tilted plates provide in a textured surface (100).

In some embodiments of the present invention, the plates (200) may feature a rim (210, 210') at certain edges preventing blood from flowing off the one or more plates (200) at undesirable locations.

The term "texture" as used herein refers to any pattern, such as a staggered pattern (260), a honeycomb pattern or a ribbed surface texture, on a surface (100), such as the surface (100) of a plate (200).

The term "container" (300) as used herein refers to a basic tool creating a partially or fully enclosed space that can be used to contain, store, and/or transport objects or materials, preferably fluids such as blood. Preferably, a container is made from materials which are durable and at least partly rigid, such as, for example stainless steel, aluminum and/or plastics.

The term "fluidic system" as used herein refers to a fluid transport system comprising an interconnected network of one or more pumps, one or more valves, and one or more tubes. In the context of the present invention, the fluidic system is configured to remove blood from the one or more containers (300) at the outlet of the one or more plates (200) and deliver the blood to the inlet of the one or more plates (200), where the blood is dispersed. Preferably, the blood dispersion process is configured to provide a uniform blood flow over the plates' surface (100).

The term "overflow tank" as used herein refers to a container for blood which is positioned near the one or more containers (300) positioned at the outlet (220) of the one or more plates (200). The overflow tank collects excess blood flows from the one or more containers (300) positioned at the outlet (220) of the one or more plates (200).

In particular embodiments, the textured surface (100) of said plates (200) is a ribbed surface.

A ribbed surface texture was found to be especially advantageous to avoid the formation of blood clots during blood collection. The ribbed texture further ensures even and continual flow over the entire surface of the plates (200), thereby ensuring that blood dropping on the plates (200) does not create isolated drops of blood, but falls in a distributed flow of blood. Isolated drops of blood typically have the tendency to dry fast and are therefore difficult to collect. By ensuring an even fluid distribution over the entire surface of the plates (200), the formation of isolated blood drops is avoided and blood collection is optimized. In addition, if clotting would occur locally, for example as a result of contaminants falling on the plates (200), the ribbed surface texture ensures that the clotting stays localized, thereby disturbing only a small part of the flow on the one or more plates (200).

The term "ribbed surface texture" as used herein is a surface texture comprising narrow, elongated features projecting from the surface. These surface features may be either continuous or interrupted, and these surface features are herein referred to as ribs (110, 110', 110").

In some embodiments, different parts of the one or more plates may have a different surface texture.

Different parts of the one or more plates (200) are referred to as segments (221, 222, 224, 226).

In particular embodiments, the ribbed surface comprises elongated grooves. In some embodiments, the ribbed surface (100) comprises elongated grooves running from the outlet (220) of the one or more plates (200) to the inlet (230) of the one or more plates (200).

A ribbed surface texture comprising elongated grooves or ribs (110, 110', 110") is particularly effective at assisting the achievement of homogeneous flow of blood on the tilted plates. In addition, a ribbed surface texture comprising elongated grooves has the additional advantage that the clotting of blood in one of the channels defined by two adjacent ribs does not disrupt the flow of blood in neighboring channels.

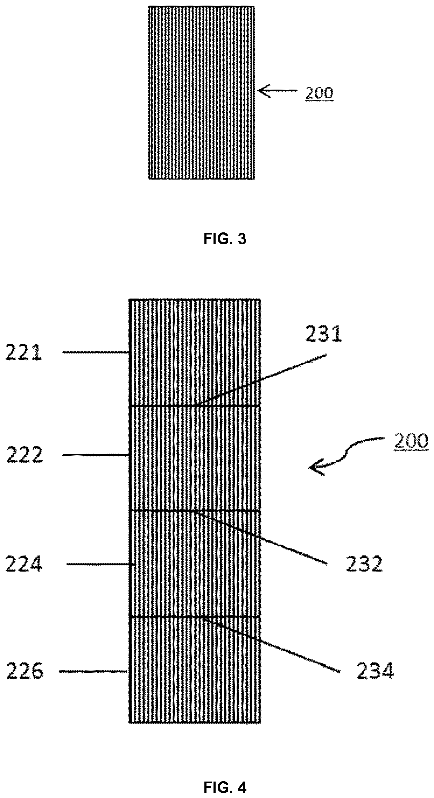

In particular embodiments, the ribs (110, 110', 110") are interrupted on regular intervals by means of a flow redistribution feature or FRF (231, 232, 234), such as a groove which is either perpendicular or at an oblique angle with respect to the elongated grooves. This is shown in Figure 4. Through the use of FRFs (231, 232, 234), the surface formed by the one or more plates (200) is divided into various segments (221, 222, 224, 226). The inventors made the remarkable discovery that through the use of FRFs (231, 232, 234), an extraordinarily uniform blood distribution can be obtained over large surfaces, thereby overcoming the challenge of blood clot minimization in plate-based blood collection systems.

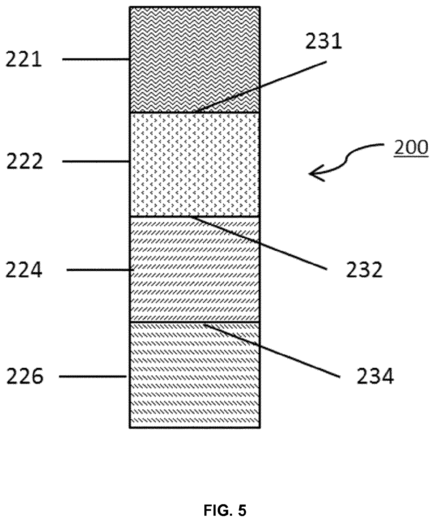

The term "flow redistribution feature" or "FRF", as used herein refers to any surface pattern irregularity which is used to locally alter the blood flow, thereby assisting in achieving a more uniform blood flow. The term "segments" as used herein refers to a part of the textured surface (100) of the plates (200) that has a particular surface texture. In some embodiments, different segments (221, 222, 224, 226) of the one or more plates (200) have a different texture (as shown in figure 5).

In particular embodiments, each rib (110, 110', 110") of said ribbed surface (100) has a V-shape, U-shape, trapezoid-shape, rectangular-shape, ellipse-shape, an inverted hemi circle shape and/or hemi circle-shape.

In particular embodiments, a plate (200) may feature ribs (110, 110', 110") with varying shapes.

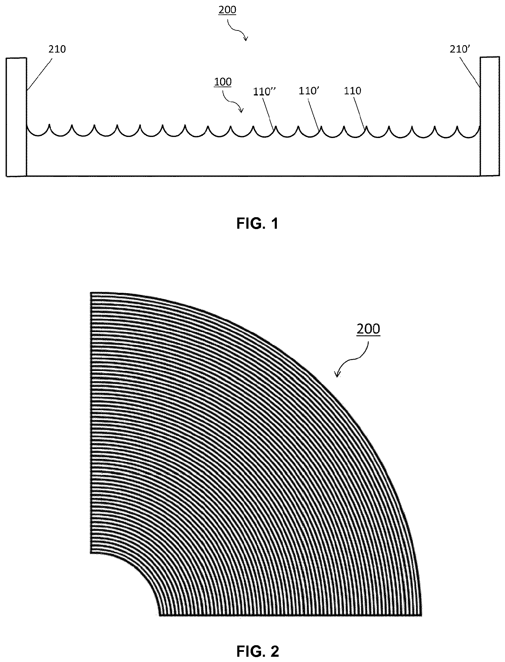

The term "inverted hemi circle shape" as used herein refers to the rib (110, 110', 110") shape obtained when, starting from a preform shaped as a flat plate, the plate material corresponding with an array of parallel beams with a hemi circular cross section are removed by, for example, a milling technique. The cross-section of a textured plate (200) with inverted hemi circle shaped ribs (110, 110', 110") is shown in Figure 1.

Various rib (110, 110', 110") shapes allow optimization of the even distribution of blood under different circumstances, thereby providing a remarkably diverse set of process parameters that can be used to minimize the challenge of blood clot prevention in a wide diversity of slaughter lines.

In preferred embodiments, the one or more plates (200) are made from ultra-high - molecular-weight polyethylene (UHMWPE).

UHMWPE is a polyethylene variety in which the individual polymer strands are extremely long chains, with a molecular mass typically between 2 and 6 million units. UHMWPE is chemically inert with respect to a great variety of chemical agents, it is very strong, it is easy to clean, and it is very tough. Therefore, it is an ideal material for the manufacture of textured plate-based slaughter animal blood collection devices for use in slaughter lines (400).

In particular embodiments, the one or more plates (200) have a top surface (100) made from a material that can be chosen from the list comprising stainless steel, plastic (for example UHMWPE) and/or aluminum.

In particular embodiments, the one or more plates consist solely of a metal such as stainless steel, aluminum or silver, more preferably stainless steel. In particular embodiments, the plates (200) consist entirely of a plastic such as polyethylene, polypropylene, polyethylene terephthalate, or polytetrafluoroethylene.

In particular embodiments, the plates (200) consist of a metal core, for example a low carbon steel core, and a plastic coating, for example a polytetrafluoroethylene cladding.

In some embodiments, the height of the ribs (110, 110', 110") of said ribbed surface (100) ranges between 0.10 mm and 100 mm, preferably between 1.0 and 20 mm, more preferably about 10 mm.

Choosing the rib (110, 110', 110") height in this range ensures optimal blood dispersion. The rib (110, 110', 110") height can be, for example, 0.2 mm, 2 mm, 5 mm, 15 mm, 25 mm or 50 mm.

In particular embodiments, the rib (110, 110', 110") height can increase gradually from the inlet (230) of the one or more plates (200) to the outlet (220) of the one or more plates, preferably the rib (110, 110', 110") height can increase between 1% and 2000%, more preferably between 5% and 400%, most preferably between 50% and 200%. A gradual rib (110, 110', 110") height increase can be advantageous because the optimum rib (110, 110', 110") height is higher when the blood flow is higher and there is commonly a higher blood flow near the outlet (220) of the one or more plates (200) compared to the blood flow near the inlet (230) end of the plates (200). For example the rib (110, 110', 110") width can increase by 5%, 10%, 20%, 40%, 70%, 190%, 350%, 610% or 1240% from the inlet (230) of the plates to the outlet (220) of the plates (200).

In particular embodiments, the lateral characteristic dimension of the individual ribs (110, 110', 110") in said ribbed surface ranges between 0.10 mm and 100 mm, preferably between 1.0 mm and 20 mm, more preferably about 10 mm.

The lateral characteristic dimension of the individual ribs (110, 110', 110") is the dimension of the smallest repeating unit in the ribbed surface (100) in the direction perpendicular to said ribs (110, 110', 110"). The term rib (110, 110', 110") width is defined to be synonymous to the lateral characteristic dimension of the individual ribs (110, 110', 110").

Choosing the ribs' (110, 110', 110") lateral characteristic dimension in this range ensures optimal blood dispersion. The rib width can be, for example, 0.5 mm, 2.5 mm, 5 mm, 15mm, 30 mm or 60 mm.

In particular embodiments, the rib (110, 110', 110") width can increase gradually from the inlet (230) of the one or more plates (200) to the outlet (220) of the one or more plates (200), preferably the rib (110, 110', 110") width can increase between 1% and 2000%, more preferably between 5% and 400%, most preferably between 50% and 200%. This can be advantageous because the optimum rib (110, 110', 110") width is higher when the blood flow is higher and there is commonly a higher blood flow near the outlet (220) of the one or more plates (200) compared to the blood flow near the inlet (230) of the plates (200). For example, the rib (110, 110', 110") width can increase from 1 mm near the inlet (230) of the one or more plates (200) to 2 mm near the outlet (220) of the plates (200). For example the rib height can increase by 5%, 10%, 20%, 40%, 70%, 150%, 350%, 610% or 1240% from the inlet (230) of the plates (200) to the outlet (220) of the plates (200).

The higher rib (110, 110', 110") width is preferably accounted for by adapting the ribbed surface pattern according to the rib (110, 110', 110") width. For example, the higher rib (110, 110', 110") width can be accommodated for in the surface pattern by proportionally increasing the inter-rib-distance as the rib (110, 110', 110") width increases. For example, the higher rib (110, 110', 110") width can be accommodated for in the surface pattern by allowing some ribs (110, 110', 110") to vanish from the surface pattern as other ribs (110, 110', 110") widen.

In a preferred embodiment, the one or more plates (200) are tilted plates, forming a tilted surface (100) having a slope larger than 0.0%, and preferably less than 20%, preferably between 1.0% and 10%, more preferably about 2% In preferred embodiments, the outlet (220) of the one or more tilted plates is at their higher end.

In preferred embodiments, the inlet (220) of the one or more tilted plates is at their lower end.

In preferred embodiments, there are multiple outlets (220).

In preferred embodiments, there are multiple inlets (230).

It should be clear that the inlet(s) and outlet(s) are not limited to the features shown in the figures. A skilled person will consider as outlet different types of drainage systems known in the art such as holes of gutters. A skilled person will consider as inlet different types of fluid injection systems known in the art.

The term "higher end" as used herein is the part of the one or more tilted plates at approximately the greatest height. The term "lower end" as used herein is the part of the one or more tilted plates at approximately the lowest height. The term "sides" as used herein refers to the edges of the one or more tilted plates which are neither the lower end nor the higher end. The term "direction of slope of the one or more tilted plates" as used herein is defined as follows: consider the direction normal to the plane in which the one or more tilted plates are oriented. The projection of this direction on the horizontal plane is in the direction of slope of the one or more tilted plates.

The slope of a tilted surface (100) is the tangent of the smallest angle between the direction normal to the plane of the tilted surface (100) and the vertical direction. The vertical direction is the direction parallel to the gradient of the gravitational field.

In preferred embodiments, the device further comprises a slaughter animal suspension unit (430) for transporting slaughter animals in a direction of transport.

In preferred embodiments, the direction of slope of said one or more tilted surfaces (100) are parallel to the direction of transport of the slaughter animals along a slaughter animal suspension unit (430).

A slaughter animal suspension unit (430) is a device comprising one or more beams, hooks, chains, and/or ropes from which stunned or anesthetized slaughter animals (410, 411, 412, 413, 414, 415) can be hung in a downward position.

A particular advantage of configuring the slope of the one or more tilted plates is in the direction of livestock transport is that the tilted plates collect the blood efficiently towards a small endpoint (the lower end of the one or more tilted plates).

In preferred embodiments, the direction of slope of said one or more tilted plates are perpendicular to the direction of transport of the slaughter animals (410, 411, 412, 413, 414, 415) along a slaughter animal suspension unit (430).

A particular advantage of configuring the direction of slope of the one or more tilted plates in the direction perpendicular to the direction of slaughter animal (410, 411, 412, 413, 414, 415) transport is that the distance over which blood transport occurs is minimized. This also minimizes the distance over which blood can clot.

In a preferred embodiment, the direction of slope of said one or more tilted surfaces (100) is at an oblique angle to the direction of transport of the slaughter animals (410, 411, 412, 413, 414, 415) along a slaughter animal suspension unit (430).

A particular advantage of configuring the direction of the slope of the one or more tilted plates at an oblique angle compared to the direction of livestock transport is that a favorable trade-off may be achieved between the distance over which blood flows and the efficient collection of the blood, thereby offering the possibility of minimizing the probability of blood clotting.

The direction of livestock transport is the direction in which slaughter animals move (410, 411, 412, 413, 414, 415), for example the direction along which slaughter animals move along a slaughter animal suspension unit (430) in a slaughter line (400).

In preferred embodiments, the width of said one or more plates (200) are between 0.050 m and 10.0 m, preferably between 0.40 m and 5.0 m, more preferably about 0.8 m.

When used in a slaughter line (400) to intercept slaughter animal blood, the one or more plates (200) are preferably sufficiently wide such that spilled slaughter animal blood is intercepted efficiently. Also, the particular width of the tilted plates according to the invention ensures that blood can be collected in an efficient manner.

The width of the one or more tilted plates is defined to be the plates' (200) dimension in the direction perpendicular to the direction of slaughter animal (410, 411, 412, 413, 414, 415) transport along a slaughter animal suspension unit (430).

In a further aspect, the present invention provides a method for collecting blood, preferably slaughter animal blood, said method comprising
(a) intercepting said blood on one or more plates (200);
(b) collecting said blood in one or more containers (300) at the outlet of the plates (200);
(c) optionally, recirculating said blood from said one or more containers (300) and to the inlet of said one or more plates (200), thereby ensuring continual blood flow on said one or more plates (200);
(d) optionally, collecting said blood in one or more overflow tanks collecting excess blood from said containers (300);
wherein the one or more plates (200) are further characterized by having a textured surface (100).

In a preferred embodiment, the present invention provides a method for collecting blood, preferably slaughter animal blood, said method comprising
(a) intercepting said blood on one or more plates (200);
(b) collecting said blood in one or more containers (300) at the outlet of the plates (200);
(c) recirculating said blood from said one or more containers (300) and to the inlet of said one or more plates (200), thereby ensuring continual blood flow on said one or more plates (200);
(d) optionally, collecting said blood in one or more overflow tanks collecting excess blood from said containers (300);
wherein the one or more plates (200) are further characterized by having a textured surface (100).

In preferred embodiments, this aspect of the present invention may be combined with one or more other aspects of the present invention and with one or more preferred embodiments thereof.

In preferred embodiments, an anticoagulant is added to the blood. Addition of the anticoagulant to blood is useful to prevent or minimize blood clotting. In a preferred embodiment, said anticoagulant can be selected from the list comprising citrate, heparin, Ethylene Diamine Tetra Acetic Acid (EDTA), phosphates such as sodiumtripolyphosaphate, and/or oxalate.

In preferred embodiments, the anticoagulant is dispersed over the plates (200). Dispersion of the anticoagulant over the plates (200) prevents or hinders blood from clotting.

In preferred embodiments, the anticoagulant is dispersed evenly over the plates (200). Even dispersion of the anticoagulant over the plates (200) ensures a uniform prevention of clotting over the entire surface (100) of the plates (200).

In preferred embodiments, the anticoagulant is dispersed evenly over the plates (200) using sprinklers. The use of sprinkler systems is a very efficient way of evenly dispersing anticoagulants over the plates (200).

In particular embodiments, the anticoagulant is a solute of an active component in water. Optionally, the active component can be selected from the list comprising citrate, heparin, EDTA, phosphates such as sodiumtripolyphosphate, and/or oxalate.

Sprinkler systems are systems which distribute a fluid, for example an anticoagulant, through a system of pipes, usually by pumping. The fluid is then sprayed into the air through sprinklers so that it breaks up into small drops which fall down through the action of gravity. According to methods of the present invention, pump supply system, sprinklers and operating conditions are preferably designed to enable a uniform application of fluid.

In a further aspect, the present invention comprises the use of one or more plates (200) characterized by having a textured surface (100) for collecting blood, preferably slaughter animal blood in a slaughter line (400).

In preferred embodiments, this aspect of the present invention may be combined with one or more other aspects of the present invention and with one or more preferred embodiments thereof.

The use of one or more textured plates (200) is a remarkably efficient way for reducing the problem of blood clotting in slaughter animal lines.

In a further aspect, the present invention comprises the use of the devices described in the present disclosure for collecting slaughter animal blood. This aspect of the present invention is for example suited for preventing or reducing the problem of blood clotting in slaughter animal lines (400).

In preferred embodiments, this aspect of the present invention may be combined with one or more other aspects of the present invention and with one or more preferred embodiments thereof.

In a further aspect, the present invention comprises a device for collecting and transporting blood comprising one or more plates (200), and the plates (200) having an inlet and an outlet, wherein said one or more plates (200) are further characterized by having a textured surface (100).

The textured plates (200) are highly efficient devices for intercepting and handling blood, for example the blood of slaughter animals (410, 411, 412, 413, 414, 415) in slaughter lines (400).

In preferred embodiments, this aspect of the present invention may be combined with one or more other aspects of the present invention and with one or more preferred embodiments thereof.

### EXAMPLES

### Example 1:

The present example provides a particular embodiment of the device according to the present invention. The device comprises a tilted ultra high molecular weight polyethylene (UHMWPE) plate (200) with a length of 10 m, a width of 0.8 m, a slope of 2%, said plate (200) having a ribbed surface texture comprising of long elongated grooves or ribs (110, 110', 110") running continuously from the higher end of the tilted plate (200) to the lower end of the tilted plate (200). The ribs (110, 110', 110") have a height of about 2 mm over their entire length. The ribs (110, 110', 110") have a width of about 10 mm over their entire length. In this example, the tilted plates also feature a rim (210, 210') on their sides which protrudes approximately vertically from the plane of the tilted plate (200). The rim (210, 210') is approximately 38 cm high.

The textured plate (200) as described herein is positioned under a slaughter animal suspension unit (430) in a slaughter line (400). Anesthetized slaughter animals (410, 411, 412, 413, 414, 415) are suspended in a downward position from a slaughter animal suspension unit (430). Hollow slaughter knives (420, 421, 422, 423, 424, 425) have been inserted in the slaughter animal's (410, 411, 412, 413, 414, 415) necks. Blood flowing from the resulting puncture wound is intercepted by the textured plate (200). The intercepted blood (flows on the textured plate (200) towards an outlet (220) at the textured plate's (200) lower end, where is collected in a container (300) which is positioned below the textured plate's (200) outlet (220). A fluidic system recirculates the blood from the container (300) at the textured plate's (200) outlet (220) to the textured plate's (200) inlet (230) at the higher end of the textured plate (200) where it flows on the textured plate (200). Through the action of the plate's (200) surface texture, the recirculated blood spreads out evenly on the tilted plate (200).

The recirculated blood ensures a continual blood flow over most of the surface (100) of the textured plate (200), ensuring efficient transport of slaughter animal blood. If the uniformly dispersed recirculated blood would have been absent, a significant fraction of slaughter animal blood would remain stagnant on the textured plate (200). As stagnant blood exposed to atmospheric air clots easily, this would cause obstructions to blood flow, thereby hindering the efficient transport of slaughter animal blood.

It should be clear that the recirculation of the blood is an optional element in the devices and methods as described herein.

An anticoagulant consisting of an aquatic solution comprising citrate (1% citrate by weight) is dispersed evenly over the textured plates (200) through a sprinkler system. The joint action of the anticoagulant and the even flow of recirculated blood across the textured plate (200) ensures minimal clotting of slaughter animal blood.

Excess blood from the container (300) at the outlet (220) of the textured plate (200) flows via a tube to an overflow tank, which is emptied at regular intervals by an operator. The slaughter animal blood is then further processed outside the slaughter line (400).

This example is disclosed further in figures 1 to 6.

Figure 1 shows a cross-section of a plate (200) for collecting blood, preferably slaughter animal blood. The plate (200) comprises a textured surface (100), the texture having the form of multiple ribs (110, 110', 110"). The plate (200) also comprises a rim (210, 210').

Figure 2 shows a top-view of a plate (200) according to particular embodiments of the present invention in which the plate (200) has a bended shape.

Figure 3 shows a top-view of a plate (200) according to particular embodiments of the present invention in which the plate (200) has a rectangular shape.

Figure 4 shows a top-view of a plate (200) according to particular embodiments of the present invention in which the plate (200) has a rectangular shape. The plate (200) comprises different segments (221, 222, 224, 226) each having a ribbed surface texture comprising multiple elongated ribs (110, 110', 110"). The different segments (221, 222, 224, 226) are separated by flow redistribution features, FRF (231, 232, 234), which assist in achieving a uniform blood flow across a textured surface (100).

Figure 5 shows a top-view of a plate (200) according to particular embodiments of the present invention in which the plate (200) has a rectangular shape. The plate (200) comprises different segments (221, 222, 224, 226) each having a different surface texture. The different segments (221, 222, 224, 226) are separated by flow redistribution features, FRF (231, 232, 234), which assist in achieving a uniform blood flow across the textured surface (100).

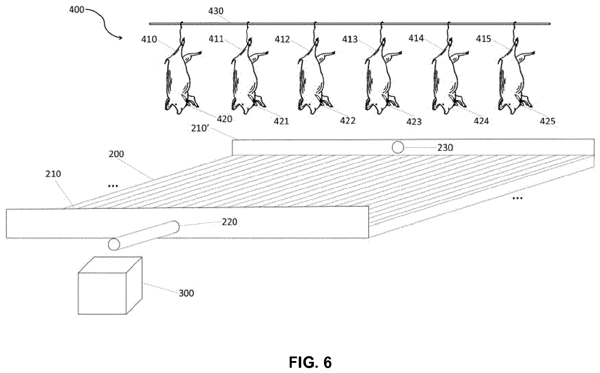

Figure 6 shows a slaughter line (400) in which stunned or sedated slaughter animals (410, 411, 412, 413, 414, 415) are suspended in a downward position from a slaughter animal suspension unit (430). The stunned or sedated slaughter animals (410, 411, 412, 413, 414, 415) are killed through exsanguination or bleeding. The bleeding process is performed using slaughter knives (420, 421, 422, 423, 424, 425). Under the slaughter animal suspension unit (430), a plate (200) is positioned which serves to collect slaughter animal blood. The plate features a rim (210, 210') which is used to prevent slaughter animal blood from dripping off the sides of the plates (200). The plate (200) also features an inlet (230) and an outlet (220). Slaughter animal blood flows off the plate (200) through the outlet (220) into a container (300). A fluidic system is used to recirculate blood from the container (300) to the inlet (230), thereby ensuring continual blood flow on the plate's (200) surface (100).

Figure 7 shows a close-up of a plate (200) for collecting blood. The plate (200) has a textured surface, more particularly a ribbed surface. The ribs (110,110',110") are shaped as oblong protrusions form a staggered pattern (260) and are arranged in a simple square lattice. Oblong protrusions at adjacent lattice sites are rotated about an angle of 90°. The oblong protrusions have a length L of 30mm and a width W of 5 mm. The distance D between adjacent oblong protrusions is 10 mm.

## Claims

1. A device for collecting slaughter animal blood, comprising:
- one or more plates (200), the one or more plates (200) having an inlet (230) and an outlet (220);
- one or more containers (300) positioned at the outlet (220) of the one or more plates (200), wherein blood flowing off the plates (200) is collected;
- optionally, a fluidic system for recirculating said blood from at least one of said containers (300) to the inlet (230) of said one or more plates (200); and
- optionally, one or more overflow tanks for collecting excess blood from said one or more containers (300);
wherein the one or more plates (200) have a textured surface (100);
wherein the one or more plates (200) are tilted plates, forming a tilted surface (100) having a slope between 0.0% and 20%, preferably between 1.0 and 10%, and more preferably about 2.0%;
and wherein the device further comprises a slaughter animal suspension unit (430) for transporting slaughter animals in a direction of transport wherein the direction of slope of said surface (100) is parallel to the direction of transport of the slaughter animals (410, 411, 412, 413, 414, 415) along the slaughter animal suspension unit (430), or in which the direction of slope of said tilted surface (100) is perpendicular to the direction of transport of the slaughter animals (410, 411, 412, 413, 414, 415) along the slaughter animal suspension unit (430), or in which the direction of slope of said tilted surface (100) is at an oblique angle to the direction of transport of the slaughter animals (410, 411, 412, 413, 414, 415) along the slaughter animal suspension unit (430).

2. The device according to claim 1 wherein the textured surface (100) is a ribbed surface, preferably wherein the ribs (110,110',110") of the ribbed surface (100) are arranged as a staggered pattern (260) comprising a simple square lattice of oblong protrusions, oblong protrusions at adjacent lattice sites being rotated with respect to each other about an angle of 90°.

3. The device according to claim 2 wherein the ribbed surface (100) comprises ribs (110, 110', 110") shaped as elongated grooves.

4. The device according to any of claims 2 or 3 wherein the ribs (110, 110', 110") of said ribbed surface (100) have a V-shape, U-shape, trapezoid-shape, beam-shape, ellipse-shape, hemi circle-shapes, and/or inverted hemi-circle shapes.

5. The device according to any of claims 1 to 4, wherein the plates (200) are made from ultra-high-molecular-weight polyethylene or stainless steel.

6. The device according to any of claims 2 to 5 wherein the height of the ribs (110, 110', 110") of said ribbed surface (100) range between 0.10 mm and 100 mm, preferably between 1.0 and 20 mm, more preferably about 10 mm.

7. The device according to any of claims 2 to 6 wherein the lateral characteristic dimension of the individual ribs (110, 110', 110") in said ribbed surface (100) ranges between 0.10 mm and 100 mm, preferably between 1.0 mm and 20 mm, more preferably about 10 mm.

8. The device according to any of claims 1 to 7, wherein the width of said surface (100) is between 0.050 m and 10.0 m, preferably between 0.20 m and 5.0 m, more preferably about 0.8 m.

9. A method for collecting slaughter animal blood from slaughter animals which are transported in a slaughter animal suspension unit, said method comprising
(a) intercepting said blood on one or more plates (200);
(b) collecting said blood in one or more containers (300) at outlet (220) of the plates (200);
(c) optionally, recirculating said blood from said one or more containers (300) to the inlet of said one or more plates (200), thereby ensuring continual blood flow on said one or more plates (200); and
(d) optionally, collecting said blood in one or more overflow tanks for collecting excess blood from said containers;
wherein the one or more plates (200) are further **characterized by** having a textured surface (100).

10. The method according to claim 11 in which an anticoagulant is added to the blood.

11. Use of the device according to any of claims 1-8 for collecting slaughter animal blood.

## Patentansprüche

1. Vorrichtung zum Sammeln von Schlachttierblut, die Folgendes umfasst:
- eine oder mehrere Platten (200), wobei die eine oder mehreren Platten (200) einen Einlass (230) und einen Auslass (220) haben;
- einen oder mehrere Behälter (300), positioniert am Auslass (220) der einen oder mehreren Platten (200), in denen Blut, das von den Platten (200) herunterfließt, gesammelt wird;
- optional, ein fluidisches System zum Rückführen des Blutes von zumindest einem der Behälter (300) zum Einlass (230) der einen oder mehreren Platten (200); und
- optional, einen oder mehrere Überlauftanks zum Sammeln von überschüssigem Blut aus dem einen oder den mehreren Behältern (300);
wobei die eine oder mehreren Platten (200) eine texturierte Oberfläche (100) haben; wobei die eine oder mehreren Platten (200) geneigte Platten sind, die eine geneigte Oberfläche (100) bilden mit einem Gefälle zwischen 0,0 % und 20 %, vorzugsweise zwischen 1,0 und 10 % und noch eher zu bevorzugen etwa 2,0 %; und wobei die Vorrichtung ferner eine Schlachttieraufhängungseinheit (430) zum Transportieren von Schlachttieren in eine Transportrichtung umfasst, wobei die Richtung des Gefälles der Oberfläche (100) parallel zur Transportrichtung der Schlachttiere (410, 411, 412, 413, 414, 415) entlang der Schlachttieraufhängungseinheit (430) ist, oder bei der die Richtung des Gefälles der geneigten Oberfläche (100) senkrecht zur Transportrichtung der Schlachttiere (410, 411, 412, 413, 414, 415) entlang der Schlachttieraufhängungseinheit (430) ist, oder bei der die Richtung des Gefälles der geneigten Oberfläche (100) in einem schrägen Winkel zur Transportrichtung der Schlachttiere (410, 411, 412, 413, 414, 415) entlang der Schlachttieraufhängungseinheit (430) ist.

2. Vorrichtung nach Anspruch 1, wobei die texturierte Oberfläche (100) eine gerippte Oberfläche ist, wobei vorzugsweise die Rippen (110,110',110") der gerippten Oberfläche (100) als ein gestuftes Muster (260) angeordnet sind, umfassend ein einfaches quadratisches Gitter von länglichen Vorsprüngen, wobei längliche Vorsprünge an angrenzenden Gitterorten zueinander um einen Winkel von 90° gedreht sind.

3. Vorrichtung nach Anspruch 2, wobei die gerippte Oberfläche (100) Rippen (110, 110', 110") umfasst, die als längliche Nuten geformt sind.

4. Vorrichtung nach einem der Ansprüche 2 oder 3, wobei die Rippen (110, 110', 110") der gerippten Oberfläche (100) eine V-Form, U-Form, Trapezoidform, Balkenform, Ellipsenform, Halbkreisformen und/oder invertierte Halbkreisformen haben.

5. Vorrichtung nach einem der Ansprüche 1 bis 4, wobei die Platten (200) aus Polyethylen mit ultrahohem Molekulargewicht oder Edelstahl gefertigt sind.

6. Vorrichtung nach einem der Ansprüche 2 bis 5, wobei die Höhe der Rippen (110, 110', 110") der gerippten Oberfläche (100) zwischen 0,10 mm und 100 mm liegt, vorzugsweise zwischen 1,0 und 20 mm und noch eher zu bevorzugen etwa 10 mm.

7. Vorrichtung nach einem der Ansprüche 2 bis 6, wobei die laterale charakteristische Abmessung der einzelnen Rippen (110, 110', 110") der gerippten Oberfläche (100) zwischen 0,10 mm und 100 mm liegt, vorzugsweise zwischen 1,0 mm und 20 mm und noch eher zu bevorzugen etwa 10 mm.

8. Vorrichtung nach einem der Ansprüche 1 bis 7, wobei die Breite der Oberfläche (100) zwischen 0,050 m und 10,0 m liegt, vorzugsweise zwischen 0,20 m und 5,0 m und noch eher zu bevorzugen etwa 0,8 m.

9. Verfahren zum Sammeln von Schlachttierblut von Schlachttieren, die in einer Schlachttieraufhängungseinheit transportiert werden, wobei das Verfahren Folgendes umfasst:
(a) Abfangen des Blutes auf einer oder mehreren Platten (200);
(b) Sammeln des Blutes in einem oder mehreren Behältern (300) am Auslass (220) der Platten (200);
(c) optional Rückführen des Blutes von dem einen oder den mehreren Behältern (300) zum Einlass der einen oder mehreren Platten (200), dabei einen kontinuierlichen Blutfluss auf der einen oder den mehreren Platten (200) sicherstellend; und
(d) optional Sammeln des Blutes in einem oder mehreren Überlauftanks zum Sammeln von überschüssigem Blut aus den Behältern;
wobei die eine oder mehreren Platten (200) ferner **dadurch gekennzeichnet sind, dass** sie eine texturierte Oberfläche (100) haben.

10. Verfahren nach Anspruch 11, wobei ein Antikoagulationsmittel dem Blut hinzugefügt wird.

11. Verwenden der Vorrichtung nach einem der Ansprüche 1-8 zum Sammeln von Schlachttierblut.

## Revendications

1. Dispositif pour recueillir du sang d'animaux d'abattage, comprenant :
- au moins une plaque (200), l'au moins une plaque (200) ayant une entrée (230) et une sortie (220) ;
- au moins un récipient (300) positionné à la sortie (220) de l'au moins une plaque (200), dans lequel le sang s'écoulant des plaques (200) est recueilli ;
- éventuellement, un système fluidique pour faire recirculer ledit sang d'au moins un desdits récipients (300) vers l'entrée (230) de ladite au moins une plaque (200) ; et
- éventuellement, au moins un réservoir de trop-plein pour recueillir le sang excédentaire dudit au moins un récipient (300) ;
l'au moins une plaque (200) ayant une surface texturée (100) ;
l'au moins une plaque (200) étant une plaque inclinée, formant une surface inclinée (100) ayant une pente comprise entre 0,0 % et 20 %, de préférence entre 1,0 % et 10 %, et de préférence encore d'environ 2,0 % ;
et le dispositif comprenant en outre une unité de suspension d'animaux d'abattage (430) pour transporter des animaux d'abattage dans une direction de transport, la direction de pente de ladite surface (100) étant parallèle à la direction de transport des animaux d'abattage (410, 411, 412, 413, 414, 415) le long de l'unité de suspension d'animaux d'abattoir (430), ou la direction de pente de ladite surface inclinée (100) étant perpendiculaire à la direction de transport des animaux d'abattage (410, 411, 412, 413, 414, 415) le long de l'unité de suspension d'animaux d'abattage (430), ou la direction de pente de ladite surface inclinée (100) étant à un angle oblique par rapport à la direction de transport des animaux d'abattage (410, 411, 412, 413, 414, 415) le long de l'unité de suspension d'animaux d'abattage (430).

2. Dispositif selon la revendication 1, la surface texturée (100) étant une surface nervurée, de préférence les nervures (110, 110', 110") de la surface nervurée (100) étant disposées comme un motif en quinconce (260) comprenant un simple treillis carré de saillies oblongues, les saillies oblongues au niveau de sites de treillis adjacents étant tournées les unes par rapport aux autres selon un angle de 90°.

3. Dispositif selon la revendication 2, la surface nervurée (100) comprenant des nervures (110, 110', 110") en forme de rainures allongées.

4. Dispositif selon l'une quelconque des revendications 2 ou 3, les nervures (110, 110', 110") de ladite surface nervurée (100) ayant une forme en V, en U, en trapèze, en faisceau, en ellipse, en hémicercle et/ou en hémicercle inverse.

5. Dispositif selon l'une quelconque des revendications 1 à 4, les plaques (200) étant en acier inoxydable ou en polyéthylène à poids moléculaire ultra-élevé.

6. Dispositif selon l'une quelconque des revendications 2 à 5, la hauteur des nervures (110, 110', 110") de ladite surface nervurée (100) étant comprise entre 0,10 mm et 100 mm, de préférence entre 1,0 et 20 mm, de préférence encore d'environ 10 mm.

7. Dispositif selon l'une quelconque des revendications 2 à 6, la dimension caractéristique latérale des nervures individuelles (110, 110', 110") dans ladite surface nervurée (100) étant comprise entre 0,10 mm et 100 mm, de préférence entre 1,0 mm et 20 mm, de préférence encore d'environ 10 mm.

8. Dispositif selon l'une quelconque des revendications 1 à 7, la largeur de ladite surface (100) étant comprise entre 0,050 m et 10,0 m, de préférence entre 0,20 m et 5,0 m, de préférence encore d'environ 0,8 m.

9. Procédé pour recueillir du sang d'animaux d'abattage provenant d'animaux d'abattage qui sont transportés dans une unité de suspension d'animaux d'abattage, ledit procédé comprenant les étapes consistant à
(a) intercepter ledit sang sur au moins une plaque (200) ;
(b) recueillir ledit sang dans au moins un récipient (300) à la sortie (220) des plaques (200) ;
(c) éventuellement, faire recirculer ledit sang dudit au moins un récipient (300) vers l'entrée de ladite au moins une plaque (200), assurant ainsi un écoulement de sang continu sur ladite au moins une plaque (200) ; et
(d) éventuellement, recueillir ledit sang dans au moins un réservoir de trop-plein pour recueillir le sang excédentaire dudit récipient ;
l'au moins une plaque (200) étant en outre **caractérisée en ce qu'**elle a une surface texturée (100).

10. Procédé selon la revendication 11, un anticoagulant étant ajouté au sang.

11. Utilisation du dispositif selon l'une quelconque des revendications 1 à 8 pour recueillir du sang d'animaux d'abattage.
